# EUROPEAN PATENT APPLICATION

(11) **EP 1 443 738 A1**
(43) Date of publication of application: **04.08.2004**
(21) Application number: 03002239.6
(22) Date of filing: 31.01.2003
(51) Int. Cl.: H04M 3/38, H04M 3/436

(54) **Method of controlling duration of barring call connections within a telecommunication network**

(71) Applicant: SIEMENS AKTIENGESELLSCHAFT, 80333 München (DE)
(72) Inventor: Papadimitriou, Dimitris, Dr., 11254 Athen (GR); Stylianopoulos, Georgios, 15234 Athen-Chalandri (GR)

(57) **Abstract**

The present invention comprises a method of controlling duration of barring call connections within a telecommunication network in which a call connection is to be established trough the network (Network) between a calling party (Sub B or C) and a called party (Sub B or C), comprising the steps of:
- activating a call barring procedure,
- initiating a schedule by setting a predefined time period,
- rejecting call connection attempts between said parties during the predefined time period, and
- deactivating the call barring procedure afterwards when expiring the predefined time period.

## Description

The present invention relates to a method of controlling duration of barring call connections within a telecommunication network and a switching system which is suitable for using the method.

### BACKROUND OF INVENTION

This invention is used in the telecommunications field and refers to the creation of two new variants of two features called "Outgoing calls barring" (further mentioned as OCB), "Incoming calls barring" (further mentioned as ICB) for telecommunication switches.

OCB feature is used for ISDN telephony users who wish to block all or some outgoing calls (central locking). OCB feature is controlled by the served user by Subscriber Control Input function or by the network administrator by Man-Machine Language (MML) Commands.

ICB feature is used for ISDN telephony users who wish to block all or some incoming calls (central locking). ICB feature is controlled by the served user by Subscriber Control Input function or by the network administrator by Administration Commands.

Subscriber Control Input (further mentioned as SCI) is a served user provided function by which the public switch user can request a function from the public switch or inform it about a situation.

MML Commands are commands from the network administration in order to control/alter the telecommunication switch's behaviour.

OCB and ICB are controlled by SCI or MML as it is shown below:
- SCI Interface (user defined option):
   Puss-button format: LH DT AC (*) (Key*) Trcl # IND RH
   Rotary format: LH DT AC (Key*) Trcl IND RH
- MML Interface (network administrator option):
   ENTR ACORD : DN=dn, LAC=lac, [SERV=service], SUBTRCL=Tracl;

The above mentioned abbreviations meaning is explained below: LH= Lift handset, DT= Dial tone, AC= Access Code, Trcl= traffic class, IND= Indication (type of traffic restriction), RH= Replace handset, DN= directory number, LAC= local area code, SUBTRCL= traffic class (type of traffic restriction).

There are currently two types of OCB/ICB: Fixed Outgoing/Incoming Call Barring (OCB-F/ICB-F) and User Controlled Outgoing/Incoming Call Barring (OCB-UC/ICB-UC). Those supplementary services can block either some or all categories of outgoing/incoming calls.

Until now, the telecommunication switches cannot handle a scheduled (casual or periodic) blocking and unblocking of either outgoing or incoming calls.

For the first case this means that a telecommunication public switch user can't use OCB in a way that it will be automatically activated and deactivated according a time schedule provided by the served user or by the network (fixed schedule).

For the first case this means that a telecommunication public switch user cannot use OCB in a way that it will be automatically activated and deactivated according a time schedule provided by the served user or by the network (fixed schedule).

### SUMMARY OF INVENTION

The present invention aims to provide a method and a switching system for use in a telecommunication network which improves the control of barring call connections.

Said problems are solved by the features mentioned in the independent claims regarding a method and regarding a switching system. Preferred embodiments of the invention are described in the dependent claims.

An aspect of the present invention refers to an extension of the existing OCB, ICB feature functionality in a way that the served user can control the outgoing and incoming calls traffic according to a schedule (served user specific or public). By this extension the served user's traffic is going to be handled automatically by enabling/disabling OCB, ICB features according to the provided schedule.

By this new network option the existing OCB, ICB features (as their function is defined by ETSI specifications) will be able to serve more efficiently and in a more user-friendly way the users who use those two features.

For this invention implementation, software changes at the processor which handles the above mentioned features for the public network (Group processor (GP) for the product "EWSD" of the company Siemens AG) will be necessary to be performed (for simplicity it will be further mentioned as GP). Also adaptations in database administration processor and MML handler (Central processor (CP) for EWSD product) will be necessary (for simplicity it will be further mentioned as CP).

According to this invention the extension of OCB, ICB features is done with the incorporation of a time related procedure at CP in a way that the activation and deactivation of OCB, ICB features is done according to a time/day relevant time schedule. Additionally, changes in order to be able to handle the modified messages sent to CP and the modified MML command (which will contain the schedule information) must be implemented.

In addition, GP must also be adapted in a way that it can handle the new SCI which will contain the schedule information.

OCB-S and ICB-S will be controlled by SCI or MML as it is shown below:
- SCI Interface :
   Puss-button format: LH DT AC (*) (Key*) HHMM Date Trcl # IND RH
   Rotary format: LH DT AC (Key*) HHMM Date Trcl # IND RH
- MML Interface :
   ENTR ACORD : DN=dn,LAC=lac,[SERV=service], TIME=HHMM, DATE=date, TYPE =casual, SUBTRCL= Tracl, KIND=AUTO;
where HHMM is the time limit of activation of OCB-S/ICB-S, DATE is the dates at which the time related activation/deactivation of OCB-S/ICB-S (= OCB-Scheduled or ICB-Scheduled) is going to take place.

The current invention increases the flexibility of OCB and ICB features by giving the feature served user the option to "program" OCB and ICB features according to a specific or a default schedule. Within this functionality the above mentioned feature's activation/deactivation become an automatic procedure and once the schedule has been inserted to the database of the public switch no further action is needed to be performed by either the served user or the network administrator.

Furthermore, the usage of both OCB-S and ICB-S gives to the served user the option of a totally automated control of this user's outgoing and incoming traffic.

### BRIEF DESCRIPTION OF THE DRAWINGS

Preferred embodiments of the present invention will now be described with reference to the accompanying drawing in which:

The figures show flow charts referring to examples of the use of OCB-S/ICB-S and includes the new function of OCB which is introduced by this invention.
Figure 1 shows an example of OCB-S function for a served user which desires to block all or a specific kind of outgoing calls for a specific period of every day.
Figure 2 shows an example of ICB-S function for a served user which desires to block all or a specific kind of incoming calls for a specific period of every day.
Figure 3 shows an example of OCB-S/ICB-S co-operation for a served user which desires to block all or a specific kind of outgoing/incoming calls for a specific period of every day.

### DETAILLED DESCRIPTION OF EMBODIMENTS OF THE INVENTION

In the figures show schematic flow charts. Sub A is a party (subscriber or user) activating the feature OCB-S/ICB-S, Sub B is a called party in case of an incoming call and a calling party in case of an outgoing call, Sub C is a called party in case of an incoming call and a calling party in case of an outgoing call. A call connection among the parties can be established through the telecommunication network (simply mentioned as Network), which usually comprises at least one switching system (not shown). The message flow is depicted and contains short description.

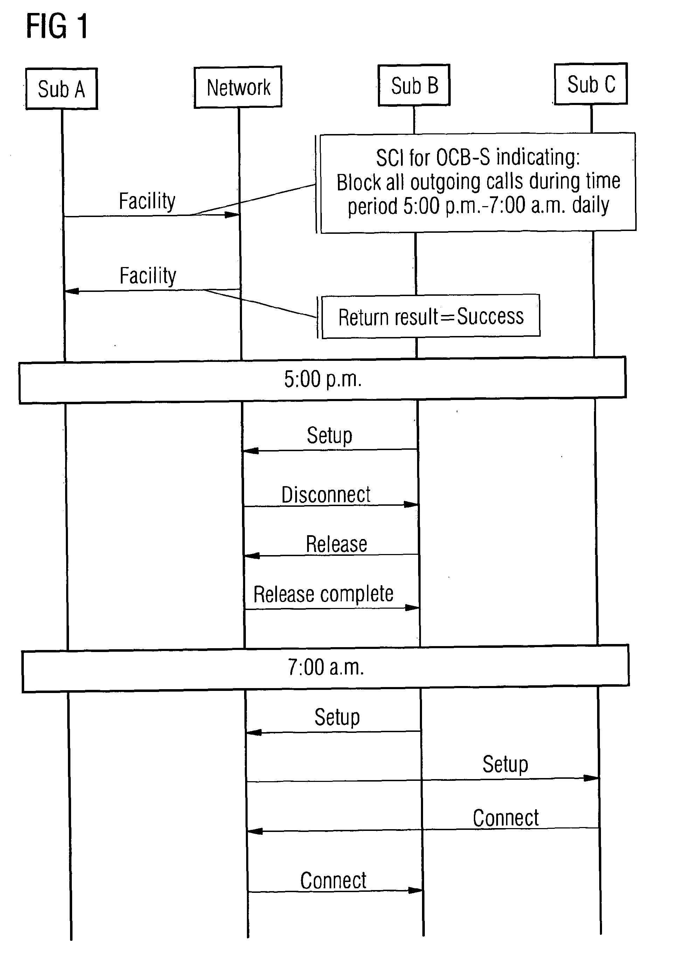

At figure 1 Sub A gives the order to the network (via SCI) to block daily all outgoing calls which are done from 17:00 p.m. till 07:00 a.m. in order to deduce non-business calls during those hours. Then, Sub B (belongs to the same company with Sub A) tries to establish an outgoing call during the restricted time and this attempt is rejected by network. Sub B tries to establish an outgoing call during the unrestricted time period and this attempt is accepted by network and connection is established.

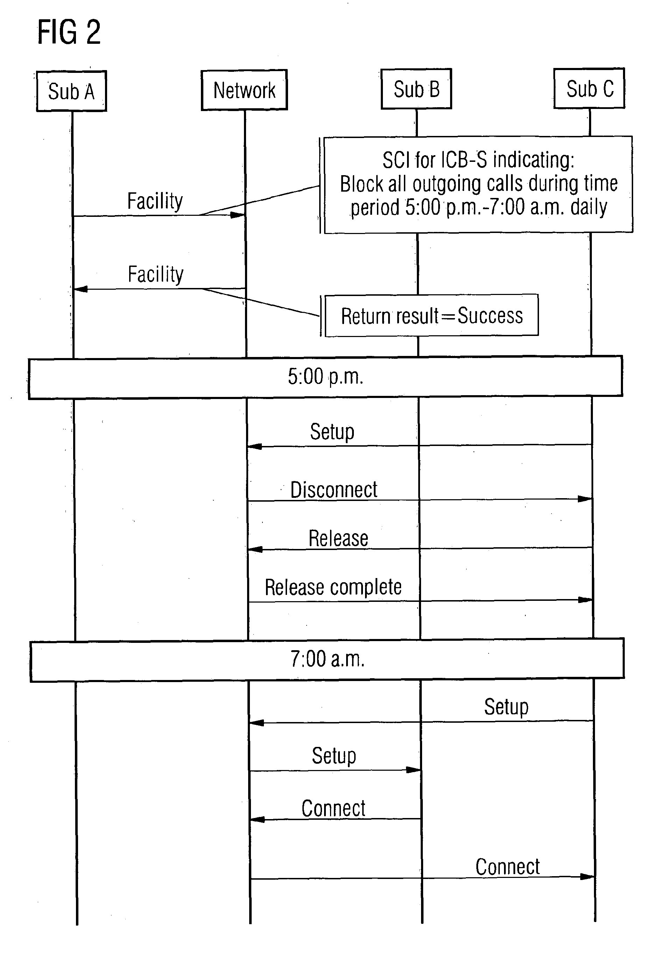

At figure 2 Sub A gives the order to the network (via SCI) to block daily all incoming calls which are done from 17:00 p.m. till 07:00 a.m. in order to deduce non-business calls during those hours. Then, Sub C (doesn't belong to the same company with Sub A) tries to establish a call with sub B (belongs to the same company) during the restricted time and this attempt is rejected by network. Sub C tries to establish a call with sub B again during the unrestricted time period and this attempt is accepted by network and connection is established.

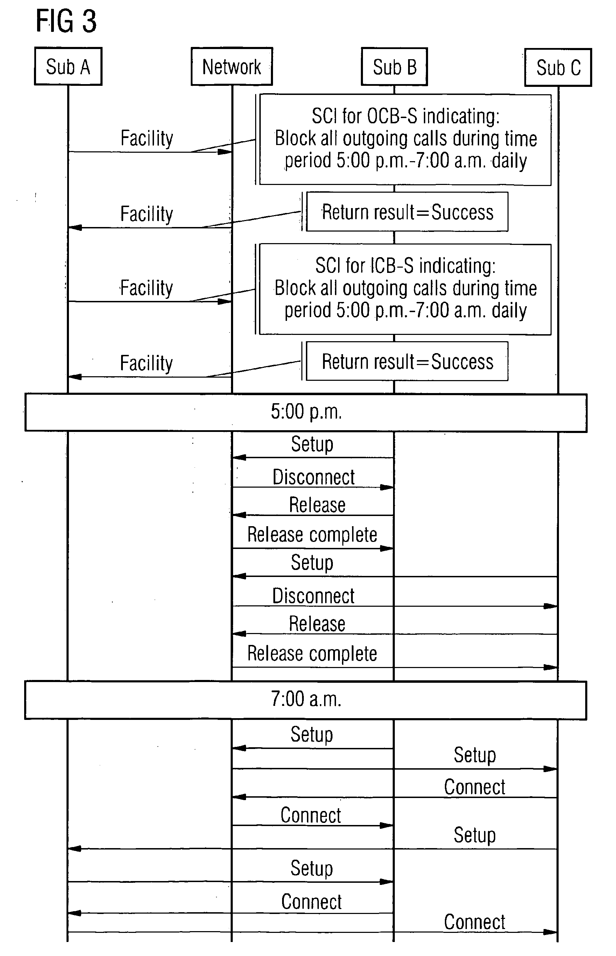

At figure 3 Sub A gives the order to the network (via SCI) to block daily all outgoing and incoming calls which are done from 17:00 p.m. till 07:00 a.m. in order to deduce non-business calls during those hours. Then, Sub B (belongs to the same company with Sub A) tries to establish an outgoing call during the restricted time and this attempt is rejected by network. Sub C (doesn't belong to the same company with Sub A) tries to establish a call with sub B (belongs to the same company with Sub A) during the restricted time and this attempt is also rejected by network. Sub B tries to establish an outgoing call during the unrestricted time and this attempt is accepted by network and connection is established. Sub C tries to establish a call with sub A during the unrestricted time period and this attempt is accepted by network and connection is established.

## Claims

1. Method of controlling duration of barring call connections within a telecommunication network in which a call connection is to be established trough the network (Network) between a calling party (Sub B or C) and a called party (Sub B or C), comprising the steps of:
- activating a call barring procedure,
- initiating a schedule by setting a predefined time period,
- rejecting call connection attempts between said parties during the predefined time period, and
- deactivating the call barring procedure afterwards when expiring the predefined time period.

2. Method as claimed in claim 1, wherein incoming call connection attempts between the called party (Sub B) and the calling party (Sub C) are rejected.

3. Method as claimed in claim 1, wherein outgoing call connection attempts between the calling party (Sub C) and the called party (Sub B) are rejected.

4. Method as claimed in claim 1, 2 or 3, wherein the time period is predefined by a default value.

5. Method as claimed in any one of the previous claims, wherein the time period is predefined by the party (Sub B) activating the call barring procedure.

6. Method as claimed in any one of the previous claims, wherein the set time period is periodically scheduled.

7. A switching system within a telecommunication network which is suitable for using the method according to any one of the previous claims.
